Europäisches Patentamt

**European Patent Office**

**Office européen des brevets**

(11) Publication number: **0 055 912**
**A2**

## EUROPEAN PATENT APPLICATION

(21) Application number: **81306022.5**

(22) Date of filing: **22.12.81**

(51) Int. Cl.³: **H 03 K 13/24**
**H 03 K 13/252**

(30) Priority: **30.12.80 US 221675**

(43) Date of publication of application:
**14.07.82 Bulletin 82/28**

(84) Designated Contracting States:
**DE FR GB IT**

(71) Applicant: **Honeywell Information Systems Inc.**
**200 Smith Street**
**Waltham Massachusetts 02154(US)**

(72) Inventor: **Harris, Richard G.**
**492 Lincoln Street**
**Franklin Massachusetts 20230(US)**

(74) Representative: **Riddle, John et al,**
**Honeywell Control Systems Ltd. Patent Department**
**Charles Square**
**Bracknell, Berks.(GB)**

(54) A switch assembly multiplexing system.

(57) An electronic system for multiplexing the outputs of a plurality of switch arrays (13a to 13h) each including a plurality of switches (13j) connected in parallel is disclosed, wherein the switch arrays are selectively enabled to apply the binary code represented by the switch settings of the enabled array to an information transfer line array (14). A current sensor/voltage level converter (15) senses the occurrence of a current flow in the line array to apply a representative logic level voltage to a receiving device.

EP 0 055 912 A2

- 1 -

A SWITCH ASSEMBLY MULTIPLEXING SYSTEM

The present invention relates to a multiplexing system for multiplexing a switch assembly, including a plurality of switch arrays, and for applying any one of a plurality of binary codes represented by the switch settings of the switch assembly to an information transfer line array.

PRIOR ART

Where a plurality of switch arrays each comprised of a plurality of parallel single-pole-single-throw (SPST) switches have been set to indicate a plurality of binary codes to be selectively applied to an information transfer line array, a problem arises in attempting to multiplex between the plural switch arrays.

One solution has been the enablement of each switch array of a switch assembly selectively, and the application of the parallel outputs of each of a plurality of switch arrays to a corresponding plurality of input connectors. In this manner, if each switch array were comprised of N SPST switches, and the switch assembly were comprised of M switch arrays, then MN interconnecting communication lines including both input lines to the switch assembly and output lines leading to the inputs of a receiving device would be required.

A further solution has been the use of tri-state bidirectional interconnecting busses connecting the parallel outputs of each switch array to a single input port. Such interconnecting bus structures, however, have been susceptible to false switch closure indications which act to provide an unintended binary code to the receiving device. In addition, active logic devices in the switch assembly have been required.

According to the present invention there is provided a multiplexing system characterized by a switch assembly 13 including M switch arrays , each having N switches connected in parallel, a decoder responsive to binary address codes to selectively enable one of the switch arrays, diode means operable to impede current flow through disabled ones of the switch arrays, and N information transfer lines in electrical communication with the diode means to receive a binary code from a selected one of the switch arrays.

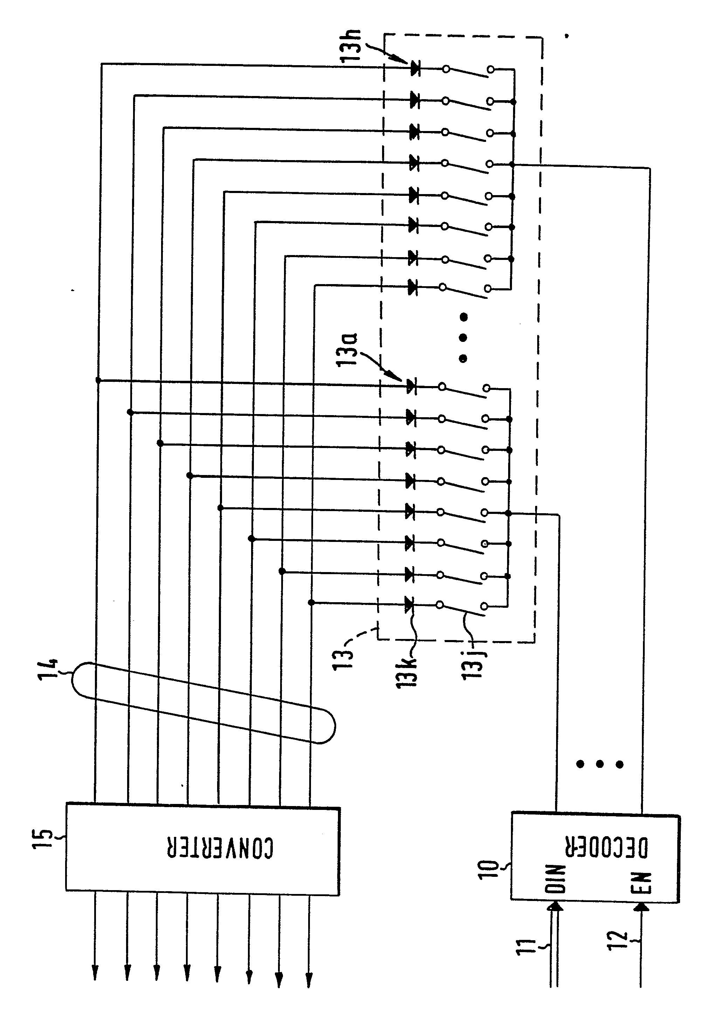

An embodiment of the invention will now be described, by way of example, with reference to the accompanying Figure, which is a functional block diagram of a switch assembly multiplexing system in accordance with the present invention.

Referring to the Figure, the multiplexing system includes a three-to-eight bit decoder 10 which receives a three bit command by way of a control bus 11. The enable input to the decoder is connected to a control line 12, and the eight outputs of the decoder are connected to corresponding inputs to a switch assembly 13.

The decoder 10 is of a type manufactured and sold by Texas Instruments Inc. of Dallas, Texas, and represented to the public as an SN74LS138N decoder.

The switch assembly 13 is comprised of eight switch arrays, and each switch array is comprised of eight single-pole-single-throw (SPST) switches connected to parallel. Each of the SPST switches comprising an array, by way of example switch array 13a, include a normally open contact and a common or relay contact. Each output of the decoder 10 is connected to the normally open contacts of the SPST switches comprising a switch array, and each common contact of each SPST switch is connected to the cathode of an associated diode. The anode of each diode is connected to one of a plurality of communication lines comprising an information transfer line array 14.

Each of the switch arrays 13a to 13h are connected to the line array 14 in such a manner that the anodes of the diodes associated with the first SPST switch of each array is connected to a first conductive line of the line array 14. In like manner, the anodes of the diodes of the eighth switch of each switch array is connected to the eighth conductive line of the line array 14.

The line array 14 is connected on a one-to-one basis to the eight parallel inputs of a current sensor/voltage level converter 15. The converter 15 is of a type manufactured and sold by Texas Instruments Inc. of Dallas, Texas, and represented to the public as an SN74LS244N converter. In the present embodiment disclosed herein, each input of the converter 15 is connected through a 1000.0 ohm resistor to a logic one source.

In operation, the decoder 10 is enabled by a logic one appearing on the control line 12. In response to a three bit binary code appearing on the control bus 11, one of eight outputs of the decoder 10 transitions to a logic zero level. The switch array to which the logic zero level is applied thereby is enabled. The diodes connected to the closed switches comprising the enabled switch array are shorted, and as a result current flows through the diodes back towards the decoder 10. The current flow is sensed by the converter 15 which responds by issuing an appropriate logic signal at that one of its eight outputs corresponding to the input in which current flow was sensed.

In the event it is desired to issue other binary codes to the information transfer line array 14, a different three bit command code may be applied to the decoder 10. The multiplexing capability provided by the present system therefore, provides a means for applying any one of a plurality of binary codes to the line array 14 without requiring either a hardware or a software change to the multiplexing system or to the receiving devices. An increased flexibility thereby is provided wherein the switch settings of any switch array comprising the switch assembly 13 may be changed as desired, and any switch array of the switch assembly may be addressed at any one time to provide a binary code to the line array 14.

The switch assembly multiplexing system including decoder 10 and switch assembly 13 is entirely passive, and includes no active components. Further, only 8+8 or sixteen information transfer lines are used. That is, eight conductive lines connecting the outputs of decoder 10 to switch assembly 13 inputs, and eight conductive lines connecting the inputs of converter 15 to the outputs of switch assembly 13. Still further, the diodes serially connected to the common contacts of the SPST switches of each switch array prevent the occurrence of current flow through closed switches of switch arrays which are not enabled, and thus prevent an inadvertent closed switch indication by the converter 15.

- 5 -

CLAIMS

1. A multiplexing system characterized by a switch assembly 13 including M switch arrays (13a to 13h), each having N switches (13j) connected in parallel, a decoder (10) responsive to binary address codes to selectively enable one of the switch arrays, diode means (13k) operable to impede current flow through disabled ones of the switch arrays, and N information transfer lines (14) in electrical communication with the diode means to receive a binary code from a selected one of the switch arrays.

2. The system of Claim 1, characterized by a current sensor (15), operable to issue a logic level voltage in response to current flow in said information transfer lines.